Europäisches Patentamt

European Patent Office

Office européen des brevets

(11) Numéro de publication: **0 217 693
B1**

(12) **FASCICULE DE BREVET EUROPEEN**

(45) Date de publication du fascicule du brevet:
**03.05.89**

(21) Numéro de dépôt: **86401831.2**

(22) Date de dépôt: **19.08.86**

(51) Int. Cl.⁴: **B65G 5/00**

(54) Puisard pour cavité souterraine de stockage de gaz liquéfié sous pression.

(30) Priorité: **21.08.85 FR 8512562**

(43) Date de publication de la demande:
**08.04.87 Bulletin 87/15**

(45) Mention de la délivrance du brevet:
**03.05.89 Bulletin 89/18**

(84) Etats contractants désignés:
**DE GB IT SE**

(56) Documents cités:
**EP-A- 0 013 854**

(73) Titulaire: **Société Française de Stockage Géologique "GEOSTOCK", Tour Aurore - Cédex No 5, F-92080 Paris La Défense 2(FR)**

(72) Inventeur: **Berezoutzky, Georges, 13 rue de Nangis Nouveau Village, F-77240 Cesson(FR)**

(74) Mandataire: **Pinguet, André, CAPRI 28 bis, avenue Mozart, F-75016 Paris(FR)**

ACTORUM AG

## Description

La présente invention concerne les dispositifs de stockages souterrains de gaz liquéfiés sous pression, tels que butane et propane à l'intérieur de cavités formées dans des massifs imprégnés d'eau (nappe phréatique), la pression hydrostatique au niveau de la cavité étant mise à profit pour équilibrer la pression de liquéfaction du gaz, et a plus particulièrement pour objet un puisard pour cavité souterraine d'un tel stockage.

Dans une telle cavité, on sait qu'il y a un écoulement permanent, de la roche vers l'intérieur de la cavité, d'eau d'exhaure, et que cette eau se rassemble à la partie inférieure de la cavité. Bien entendu, de tels stockages ne peuvent être envisagés que pour des produits qui, à l'état liquide, ont une densité inférieure à celle de l'eau et ne sont pas miscibles à l'eau. On trouve donc dans la cavité trois phases superposées: au fond, une phase d'eau, au-dessus de l'eau, du gaz liquéfié, et au-dessus de la surface du liquide, du gaz qui remplit toute la partie supérieure -ou ciel- de la cavité. Le gaz est en équilibre avec le liquide, la pression étant la pression d'équilibre liquide-vapeur à la température régnante (en général voisine de 15°C), la profondeur de la cavité étant déterminée pour avoir la pression hydrostatique suffisante, en fonction des caractéristiques du produit stocké.

L'exploitation du stockage se fait par extraction ou introduction de produit liquide, ce qui a pour effet de déplacer la surface d'équilibre liquide-gaz. L'interface eau-phase liquide est maintenue à un niveau sensiblement constant, c'est-à-dire entre deux niveaux assez rapprochés: les pompes d'exhaure se mettent en marche dès que l'eau atteint un niveau supérieur déterminé, et s'arrête dès que l'interface eau-liquide descend à un niveau inférieur déterminé.

Les cavités comportent un radier avec un puisard, le radier présentant en général une légère pente vers le puisard. Le niveau supérieur de l'eau est toujours fixé à une certaine profondeur dans le puisard, et l'orifice d'extraction de liquide est placé également dans le puisard, au-dessus du niveau supérieur maximum de l'eau.

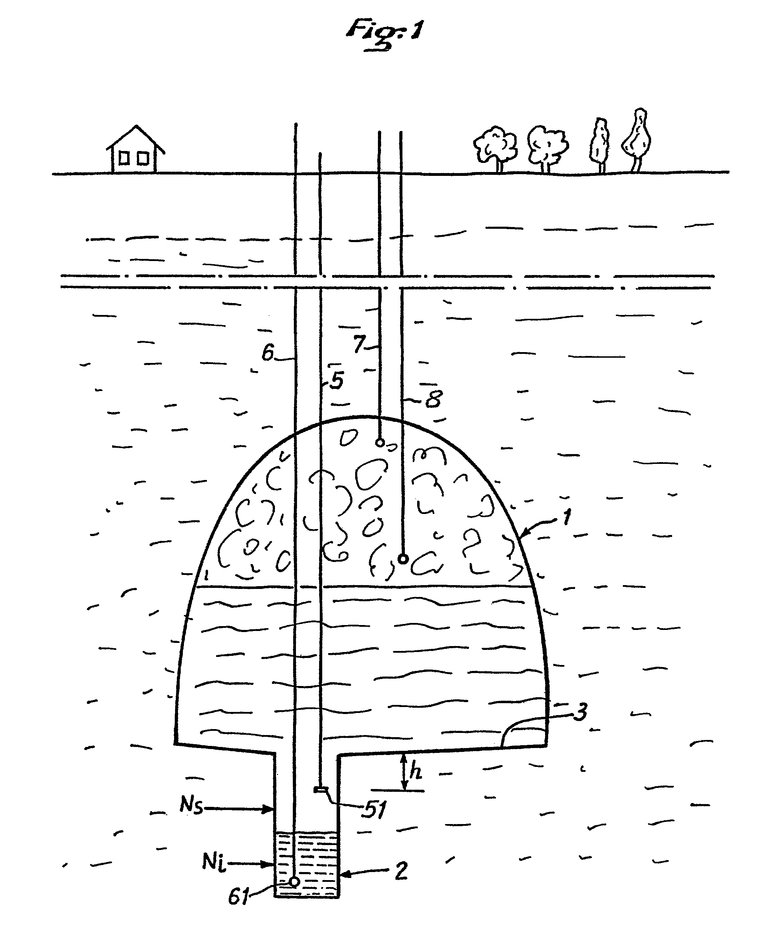

La Figure 1 des dessins ci-joints représente schématiquement un tel stockage tel qu'il en existe de nombreux actuellement. On supposera, uniquement pour simplifier le vocabulaire qui le produit stocké est du butane. Mais, bien entendu, ce pourrait être tout autre gaz liquéfiable sous pression, de densité liquide inférieure à celle de l'eau et non miscible à l'eau.

La cavité 1 est complétée vers le bas par un puisard 2 creusé dans le radier 3. On a représenté schématiquement quatre conduits d'exploitation: un tube 5 pour l'extraction du butane liquide; un tube 6 pour le pompage de l'eau d'exhaure; un tube 7 d'évent gazeux débouchant dans le ciel de la cavité; et un tube 8 pour l'introduction de butane liquide. L'orifice 61 d'aspiration d'eau est prévu au voisinage du fond du puisard, et les commandes de la (ou des) pompe sont prévues pour maintenir le niveau de l'eau entre deux niveaux: un niveau supérieur Ns et un niveau inférieur Ni. Tout ceci est classique. L'orifice 51 d'aspiration de butane liquide est placé à une certaine profondeur h dans le puisard, au-dessus de Ns.

Il est connu, pour assurer l'arrêt de l'exploitation du stockage et sa mise en sommeil en sécurité, de remplir d'eau certains au moins des tubes d'exploitation, ou éventuellement de laisser l'eau remonter dans ces tubes, jusqu'à une hauteur H telle que l'ensemble soit en équilibre hydrostatique. Pour permettre d'effectuer cette opération avec sûreté, on prévoit de placer par exemple l'orifice d'aspiration 51 du butane à une profondeur h dans le puisard, suffisante pour que le volume de puisard restant au-dessus soit supérieur au volume de la colonne d'eau dans le tube jusqu'à la hauteur H d'équilibre. Si S est la section du puisard, et s la section du (ou des) tube à remplir, h est déterminé par la condition:

$$hS > Hs$$

Ceci est classique. La sécurité est obtenue au prix d'un accroissement de la profondeur du puisard, ce qui entraîne un creusement plus profond et un allongement des tubes, en définitive, une dépense supplémentaire, par rapport au placement de l'orifice 51 à l'affleurement du radier 3. Accroître la section S du puisard permettrait de réduire la profondeur. Mais cela entraîne une augmentation du coût du puisard. D'autre part, pour connaître le débit d'exhaure avec une précision suffisante, il est préférable d'avoir, à l'endroit où se fait le pompage de l'eau, une section de puisard limitée.

La présente invention a pour objet une disposition qui permet de concilier les conditions contradictoires. A partir d'un dispositif de stockage connu, tel que décrit ci-dessus en faisant référence à la figure 1 et tel que défini dans la partie précaractérisante de la revendication la présente invention est caractérisée en ce que le puisard présente sur sa hauteur deux parties de sections différentes, une partie supérieure de grande section, et une partie inférieure de petite section, l'orifice d'un tube à remplir étant placé au voisinage de la jonction des deux parties.

On pourra ainsi, dans la partie supérieure, laisser monter une réserve d'eau suffisante pour remplir un tube jusqu'à une hauteur H suffisante pour assurer l'équilibre hydrostatique avec la pression qui règne dans la cavité. La hauteur h' de la partie supérieure dont la section est S' devra bien entendu satisfaire la condition

$$h'S' > Hs$$

On réduit ainsi la profondeur du puisard, le volume des déblais restant le même et l'on connaît tout aussi bien le niveau de l'eau.

La Figure 1 est une vue en coupe schématique d'une cavité de stockage classique.

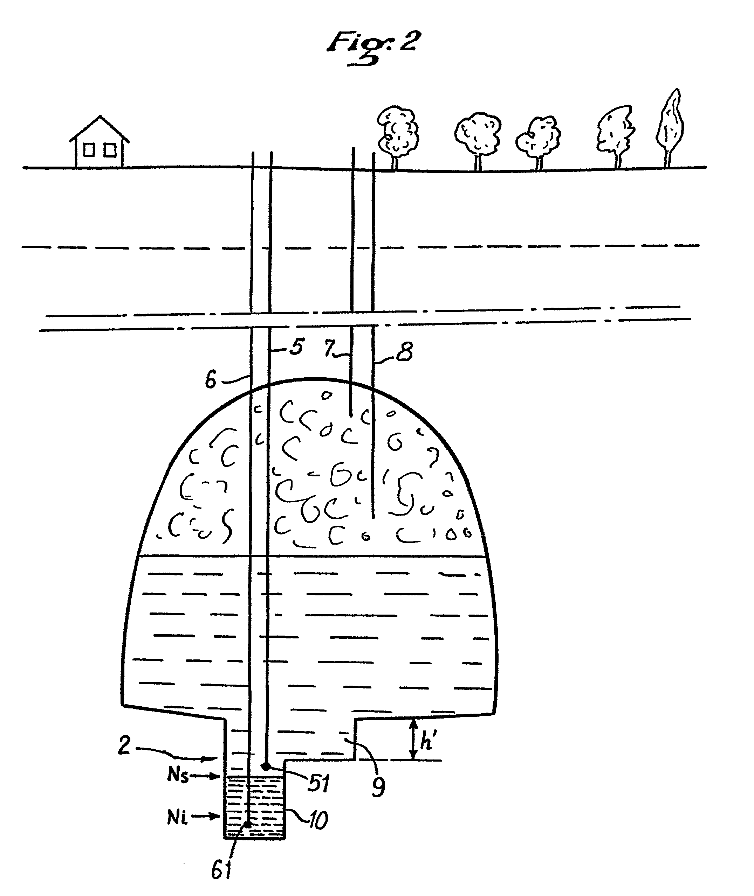

La Figure 2 représente schématiquement en coupe une cavité selon l'invention. Les éléments qui sont les mêmes que sur la Figure 1 portent les mêmes références.

Le puisard 2 est constitué d'une partie supérieure 9 de grande section S' et d'une partie inférieure 10 de section réduite S. La partie 10 a la même hauteur que la partie du puisard de la Figure 1, qui est située en-dessous de l'orifice d'aspiration 51. Mais la hauteur h' au-dessus de cet orifice est réduite. Le volume des déblais pour creuser ce puisard n'est pas modifié par rapport à celui de la figure 1, mais la profondeur est moindre. Le creusement est donc plus facile, et les longueurs des tubes des pompes d'eau sont réduites.

Cette disposition ne présente aucun inconvénient ni aucune difficulté d'aucune sorte, et présente l'avantage d'un abaissement du prix de l'installation.

Il est remarquable que l'on construise depuis près de dix ans des cavités du type de celle de la Figure 1 sans que l'on ait songé à prévoir un volume de réserve au-dessus de l'aspiration de butane, ce qui montre bien que ce n'était pas évident du tout.

## Revendications

Dispositif de stockage souterrain de gaz liquéfié sous pression, à température ambiante, qui, à l'état liquide, a une densité inférieure à celle de l'eau et n'est pas miscible à l'eau, à l'intérieur d'une cavité (1) formée dans un massif imprégné d'eau, la pression hydrostatique au niveau de la cavité étant mise à profit pour équilibrer la pression de liquéfaction du gaz, la cavité comportant un puisard (2) pour le rassemblement et l'extraction de l'eau d'exhaure, des dispositions étant prévues pour remplir d'eau au moins un tube (5) de service, sur une hauteur suffisante pour assurer l'équilibre hydrostatique avec la pression régnant dans la cavité, caractérisé en ce que le puisard présente sur sa hauteur deux parties de sections différentes, une partie supérieure (9) de grande section et une partie inférieure (10) de petite section, l'orifice (51) du tube à remplir d'eau étant placé au voisinage de la jonction des deux parties.

## Patentansprüche

Vorrichtung zur unterirdischen Lagerung von unter Druck verflüssigtem Gas bei Umgebungstemperatur, das in flüssigem Zustand eine geringere Dichte als Wasser hat und nicht mit Wasser mischbar ist, im Inneren einer in einem mit Wasser imprägnierten Gestein gebildeten Kaverne (1), wobei der hydrostatische Druck in Höhe der Kaverne genutzt wird, um den Verflüssigungsdruck des Gases auszugleichen, wobei die Kaverne eine Sickergrube (2) zum Sammeln und Entnehmen des Sickerwassers aufweist, wobei Einrichtungen vorgesehen sind, um mindestens ein Betriebsrohr (5) bis in eine solche Höhe mit Wasser zu füllen, daß das hydrostatische Gleichgewicht mit dem in der Kaverne herrschenden Druck bewirkt wird, dadurch gekennzeichnet, daß die Sickergrube über ihre Höhe zwei Teile verschiedenen Querschnitts aufweist, einen oberen Teil (9) großen Querschnitts und einen unteren Teil (10) kleinen Querschnitts, wobei die Öffnung (51) des mit Wasser zu füllenden Rohrs sich in der Nähe der Verbindungsstelle der beiden Teile befindet.

## Claims

An underground storage facility for storing a liquefied gas under pressure at ambient temperature, said gas being such that in the liquid state its density is less than the density of water and it is not miscible with water, said liquid gas being stored inside a cavity (1) formed in water-impregnated rock, the hydrostatic pressure in the vicinity of the cavity being used for balancing the gas liquefaction pressure, the cavity including a draining well (2) for collecting and extracting water which seeps into the cavity from the surrounding rock, means being provided to fill at least one of the service tubes (5) with water to a sufficient height to ensure hydrostatic equilibrium with the pressure in the cavity, the facility including the improvement whereby the draining well is constituted by two portions of different cross-sectional areas, one above the other, the top portion (9) being of larger area and the bottom portion (10) being of smaller area, and the orifice (51) of the tube for filling with water being placed in the vicinity of the junction between the two portions.

# Fig.1

# Fig. 2